# EUROPEAN PATENT SPECIFICATION

(11) **EP 2 122 158 B1**
(45) Date of publication and mention of the grant of the patent: **31.08.2016**
(21) Application number: 08712648.8
(22) Date of filing: 23.01.2008
(51) Int. Cl.: F03B 13/00, E03B 7/07, E02B 9/06

(54) **A SYSTEM OF A MICRO POWER PLANT**
SYSTEM EINES MIKROKRAFTWERKS
SYSTÈME D'UNE MICROCENTRALE ÉLECTRIQUE

(30) Priority: 23.01.2007 NO 20070425
(43) Date of publication of application: 25.11.2009
(73) Proprietor: Jensen, Tom, 4818 Faervik (NO)
(72) Inventor: Jensen, Tom, 4818 Faervik (NO)
(74) Representative: Plougmann Vingtoft a/s
(86) International application number: PCT/NO2008/000021
(87) International publication number: WO 2008/091159

(56) References cited:
- EP-A1- 0 332 766
- EP-A1- 0 332 766
- GB-A- 2 358 475
- JP-A- 60 047 883
- US-A- 716 650
- US-A- 716 650
- US-A- 873 435
- US-A- 4 352 025
- US-A- 4 372 113
- US-A- 4 372 113
- US-A1- 2005 099 011
- DATABASE WPI Week 200541, Derwent Publications Ltd., London, GB; AN 2005-401228, XP008111903 & NL 1 028 221 C1 (STOFFELEN E M) 28 February 2005

## Description

The present invention is related to micro power plants, and especially to an arrangement of a micro power plant in urban areas, wherein the micro power plant is powered by streaming water from the public mains water supply without any substantial degrading of the mains water supply capacity, according to the attached independent claim 1. Advantageous embodiments are claimed in the attached dependent claims 2 to 3.

The consumption of electric power is increasing in most of the developed countries around the world. This is the background why micro power plant technology has been developed, wherein a small stream or waterfall powers such small micro power plant. The relative high market demands for such micro power plants combined with increasing energy prices has made procurement prices for micro power plants moderate while the increased energy prices provides an increased potential for earnings.

Typically, these systems are installed at farms ore amongst settlements in rural areas, where there is simple access to a small stream, river and/or waterfalls.

In urban areas, such sources of water are generally guided around the outskirts of the settlements, or being passed through the settlement via underground tunnels. The water source in urban areas is usually the mains water supply and distribution system to individual houses. Such water supply systems are often owned by the public, ore by private companies that are committed to a certain standard for the supply of water by regulating rules. In the present application there is no distinction between public or private owned water supply companies.

The amount of water and water pressure in such mains water supply systems are generally more than enough to power a micro power plant of known art. An example of using mains water supply to turn a turbine is disclosed in the Japanese patent application 57068567 A. In this disclosure, a turbine is connected to the inlet pipe of a house (villa), such that whenever water is used in the house, the turbine is turned around by the streaming water present in the inlet pipe, which in its turn powers an electric generator that charges a battery. In this manner, any surplus energy from the streaming water used by inhabitants of the house can be utilized.

In prior art several types of turbines are known, for example the Pelton type of turbine which can be used in the water inside the mains water pipe operating as a propeller in the streaming water, thereby turning a generator, for example located outside the mains water pipe in a housing above the pipe on the ground, wherein an shaft transfers the rotations from the turbine to the generator. The disadvantages with this solution are numerous. First of all, such a rotor-blade inside the mains water pipe may result in a substantial decrease of the pressure inside the pipe downstream. It is known how to compensate such decrease in pressure by using for example pumps in the water supply system. However, significant increase of costs for the water system is the consequence, and therefore this solution is not desirable. Further, maintenance work, errors in the turbine etc. may cause disruption of the water supply. However, it is also clear that such streaming water encountered in mains water supply systems represent a not yet utilized resource for providing electric power in urban areas.

US 4,372,113 A describes an arrangement of a micro power plant connected to a main water supply pipeline according to the preamble of claim 1.

According to an aspect of the present invention, such utilization of the streaming water is provided for by using a shunt like coupling of the water pipes.

According to the present invention, water from the mains water pipeline is guided through a draw off line to the micro power plant wherein the water after being used by the micro power plant is feed back to the mains water pipeline via a supply branch line connected to an ejector device driven by the streaming water in the mains pipeline. Therefore, no water is lost in the process, and the ejector device provides for substantially no loss of water pressure in the mains pipeline. According to the present invention, any use of water in the mains pipeline will provide power for the micro power plant. In larger urban areas, the mains water pipeline is almost always in use. Therefore, in such areas a micro power plant according to the present invention will almost all the time produce electric power.

According to another aspect of the present invention, regulating vents are arranged at appropriate locations in the shunt like connection that will equalize the water feed with respect to the suction capacity of the ejector device. According to a method, the regulations of the vents are performed at the time of installation of the micro power plant wherein the maximum water feed is equalized with the maximum suction capacity of the ejector device. According to an aspect of the present invention, this arrangement provides for that any variation of the water feed, for example due to uneven use of water downstream from the micro power plant, will not result in an emptying of water from the micro power plant or the shunt like connection.

No part of the invention is, that any ejector device or similar device capable of providing the suction and to supply the water back to the mains pipeline, can be used.

Not part of the invention is an ejector device providing substantially zero loss of pressure in the mains water supply which is arranged in the mains water supply with substantially no loss of water amount and water pressure passing the shunt like coupling according to the present invention.
Figure 1 illustrates an example of embodiment of principles according to the present invention.
Figure 2 illustrates an example of a prior art ejector device, which is not part of the invention, connected to the mains water supply line.
Figure 3 illustrates an example of ejector device, which is not part of the invention, providing minimum loss of water pressure in a mains water pipe supplying the water to the micro power plant.

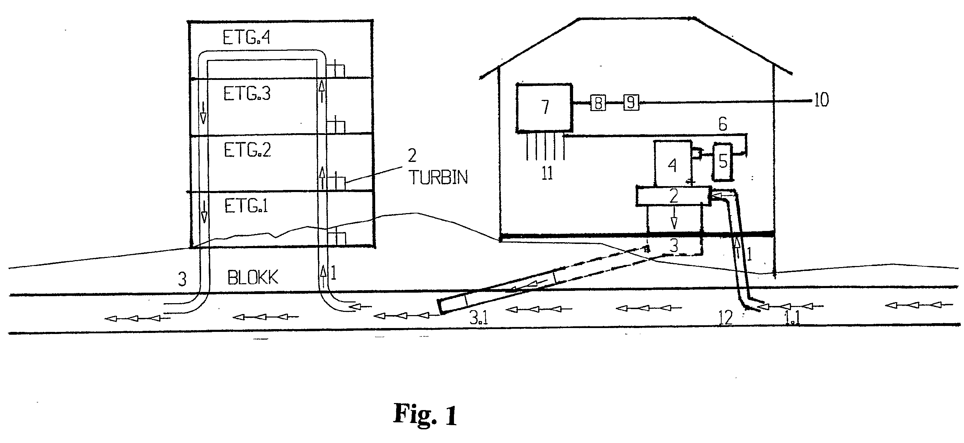

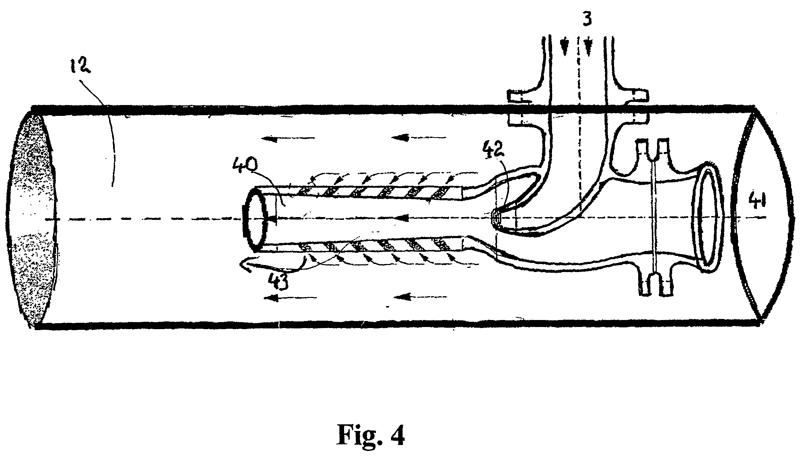

Figure 4 illustrates an example of ejector device according to the present invention. Figure 1 depicts a principle arrangement of a micro power plant according to the present invention. The mains pipeline 12 transports water towards two examples of connections that may be provided for according to the present invention. Viewed in the direction of the streaming water in the mains water pipeline 12, water is first tapped off at 1 with a pipeline supplying water to a micro power plant 2. Further downstream, it is illustrated in figure 1 how an apartment building can be connected to micro power plants according to the present invention. The principles of the present invention as illustrated in the illustration of the villa applies equally well for the apartment building. The tapped off water transported through the pipeline 1 from the mains water supply 12 passes through a vent (not illustrated) before entering the turbine 12. In an example of embodiment of the present invention, can the turbine 12 maximum utilize 14 litre of water per second to produce 5 Kw current. Adjustments of this water stream may be done via the vent 1.

The turbine 2 powers a generator 4 through a connected shaft. The current from the generator is passed through a contactor 5 via cable 6 to a fuse box or distribution cabinet 7 inside the house. Even though the turbine is illustrated to be located inside the house, it can be arranged on the outside of the house in a separate housing. The original supply of electric power from the electric power company is connected to the fuse box or distribution cabinet 7 via cable 10. As known to a person skilled in the art two electric meters 8 and 9 may be connected in this circuitry, wherein for example meter 8 measures the amount of electric power generated by the turbine 2 that is sold over the cable 10 to the electric power company, while meter 9 measures the amount of electric power that is used by the household that is delivered at the same time to the house via cable 10 from the electric power company. In this manner it is possible to settle the account for the current used and respectively produced for this property.

According to the present invention, the water used by the micro power plant is transported back into the mains water pipeline 12 by an ejector capable of providing a suction of water out of the micro power plant and then feed the water back into the mains water pipeline. The technical problem is related to compensating the fall of water pressure after passage of the water through the micro power plant before the water is joined with the water inside the mains water pipeline which has a much higher water pressure than the water that has passed the micro power plant. Use of pumps may compensate for the fall of water pressure as known to a person skilled in the art. However, the use of pumps would ruin the potential energy savings form this arrangement. It is of course only beneficial to use the present invention if for example meters such as meters 8 and 9 in figure 1 actually displays a surplus energy flow towards the villa from the micro power plant. The inventors of the present invention have realized that the streaming water in the mains pipeline are used to create an ejector providing a suction of water. With reference to figure 1 an ejector device is arranged at 3.1 located inside the mains water pipe connected to the drainage pipe 3 from the turbine 2. As known to a person skilled in the art the streaming water will create suction that in this case in figure 1 is used to transport water from the drainage pipe 3 into the mains water pipeline 12.

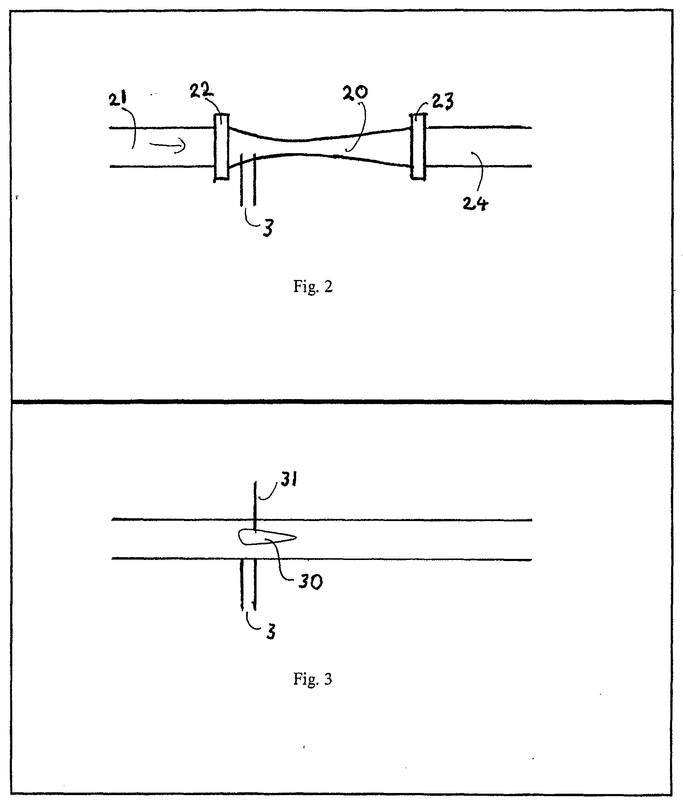

The suction effect is provided for by physical effects due to the geometrical shape of the ejector device. In the example of embodiment illustrated in figure 2, which is not part of the invention, the mains water pipeline has been cut in two pieces and an ejector 20 is inserted in between the two pieces of the mains water pipeline at this location. Water volume streaming from the upstream side is first narrowed at the inlet opening for the return water pipeline 3. When the water volume is narrowed down this way, the water pressure is lowered while the speed of the water increases. The streaming of the water passing the outlet of the return water pipeline 3 provides the suction effect as known to a person skilled in the art. The further expansion of the water volume after the passage towards the mains water pipeline provides an increase in water pressure while the speed of the water is lowered. Practical experiments with ejector designs utilized in this manner have not revealed any significant loss of water pressure downstream at locations after the ejector device, for example use of 12 litres per second of water in the micro power plant tapped from a standard dimensioned mains water pipeline provides no measurable loss of pressure in the mains water pipeline downstream from the ejector device.

Figure 3 illustrates example of an ejector device which is not part of the present invention. A drop-shaped body 30 is located inside the mains water pipeline 12 with the point end of the drop-shaped body facing downstream. As known to a person skilled in the art the inlet pipeline 3 will experience substantially the same physical conditions as in the example of ejector depicted in figure 2. In an example of embodiment of the injector depicted in figure 3 the body 30 is made of a flexible material which permits a variable volume of the body 30, for example by blowing or emptying air via the inlet/outlet pipe 31, which then regulates the size of the cross section of the body, and hence how much the body 30 will block the cross section of the mains water pipeline 12. Thereby it is possible to adjust the amount of water passing the inlet of the pipeline 3, and hence the suction capacity of the ejector can be regulated. In another example of embodiment of the present invention the size of the flexible body 30 can be regulated by an internal mechanical mechanism that expands or retract the body. In yet another example of embodiment of the present invention the drop-shaped body is made out of a fixed body size adapted to the physical dimension of the mains water supply pipeline and the suction capacity provided for by the ejector.

Figure 4 illustrates an example of an ejector device according to the present invention.

In this example of embodiment water is guided into the ejector 40 at the opening 41 from the upstream side. This water passes a nozzle 42, for example, and this streaming water creates the suction effect that draws water from the pipeline 3 into the ejector 40. The water is then guided into the conical shaped inner volume of the ejector 40 which then provides the increase in water pressure and the decrease in water speed, as known to a person skilled in the art. In addition, the conical shaped inner volume of the ejector 40 is arranged with slanted opening channels 43 in the walls that bounds this inner volume. When water passes these openings on the inside of the ejector, a suction effect is created that draws water from the surrounding water in the mains water pipeline 12. In this manner it is created an extra suction effect that draws additional water from a water reservoir connected to the mains water supply line, and hence this additional water will compensate for the loss of water pressure due to the insertion of the ejector device 40 inside the mains water pipeline 12. Therefore, this invention provides an insignificant drop of water pressure downstream in the mains water pipeline 12. The cross section diameter of the ejector is less then the inner cross section of the mains water pipeline. In an example of embodiment of the present invention, the diameter of the cross section of the ejector is substantially lower than the diameter of the cross section of the mains water pipeline12.

According to an example of embodiment of the present invention, a valve can be connected to the outlet pipeline 3 from the micro power plant which limits the amount of water per time unit the ejector can draw from the turbine 2. According to a method, such a valve located in the pipeline 3 (or alternatively in the mains water supply 12) be used to set or balance maximum supply of water to the micro power plant relative to the maximum suction capacity of the shunt like coupling. In this manner variations in consumption of water downstream will never result in an emptying of water in the micro power plant and associated shunt like structure.

## Claims

1. An arrangement of a micro power plant connected to a mains water supply pipeline (12), wherein supply of water from the mains water supply pipeline (12) to the micro power plant is guided via a branched supply pipeline (1) to a turbine (2), wherein streaming water in the branched supply pipeline (1) drives the turbine (2), the turbine (2) turns an electric generator (4), wherein the water after having passed the turbine (2) is guided into the mains water supply pipeline (12) via an outlet pipeline (3) connected to an ejector (3.1) that brings back water from the turbine (2) into the mains water supply pipeline (12),
**characterized in that** the ejector (3.1) is arranged as a body (40) located on the inside of the mains water supply pipeline (12), wherein an opening in the body (40) is located on the upstream side such that water from the upstream side enters the body (40) and is streaming towards a nozzle (42) in fluid communication with the outlet pipeline (3), the body (40) further comprises a conical shaped inner section located after the nozzle (42), wherein slanted openings (43) in sidewalls bounding the conical section provide an additional suction effect that draws additional water from the mains water supply pipeline (12) through the inner conical shaped suction of the ejector (40).

2. The arrangement according to claim 1, wherein the diameter of the ejector (3.1) is less than the inner diameter of the mains water supply pipeline (12).

3. The arrangement according to claim 1, wherein the diameter of the ejector (3.1) is substantially less than the inner diameter of the mains water supply pipeline (12).

## Patentansprüche

1. Vorrichtung für ein an eine Versorgungsleitung (12) der Wasserversorgung angeschlossenes Mikrokraftwerk, wobei eine Wassermenge von der Versorgungsleitung (12) der Wasserversorgung zum Mikrokraftwerk über eine verzweigte Versorgungsleitung (1) zu einer Turbine (2) geführt wird, wobei Fließwasser in der verzweigten Versorgungsleitung (1) die Turbine (2) antreibt, die Turbine (2) einen Stromerzeuger (4) dreht, wobei das Wasser nach dem Passieren der Turbine (2) über eine Abflussleitung (3), die mit einem Ejektor (3.1) verbunden ist, der Wasser von der Turbine (2) zurück zur Versorgungsleitung (12) der Wasserversorgung führt, in die Versorgungsleitung (12) der Wasserversorgung geführt wird, **dadurch gekennzeichnet, dass** der Ejektor (3.1) sich als ein Körper (40) an der Innenseite der Versorgungsleitung (12) der Wasserversorgung befindet, wobei eine Öffnung in dem Körper (40) derart an der stromaufwärts gelegenen Seite angeordnet ist, dass Wasser von der stromaufwärts gelegenen Seite in den Körper (40) eintritt und zu einer Düse (42) in Fluidverbindung mit der Abflussleitung (3) fließt, wobei der Körper (40) weiterhin einen konisch geformten Innenabschnitt nach der Düse (42) umfasst, wobei geneigte Öffnungen (43) in den den konischen Abschnitt begrenzenden Seitenwänden eine zusätzliche Saugwirkung bereitstellen, die zusätzliches Wasser aus der Versorgungsleitung (12) durch den inneren konisch geformten Abschnitt des Ejektors (40) ansaugt.

2. Vorrichtung nach Anspruch 1, wobei der Durchmesser des Ejektors (3.1) kleiner ist als der Innendurchmesser der Versorgungsleitung (12) der Wasserversorgung.

3. Vorrichtung nach Anspruch 1, wobei der Durchmesser des Ejektors (3.1) wesentlich kleiner ist als der Innendurchmesser der Versorgungsleitung (12) der Wasserversorgung.

## Revendications

1. Système de microcentrale électrique raccordé à une canalisation de réseau d'approvisionnement en eau (12), dans lequel l'approvisionnement de la microcentrale électrique en eau provenant de la canalisation de réseau d'approvisionnement en eau (12) est guidé via un pipeline (1) vers une turbine (2), dans lequel l'eau qui s'écoule dans le pipeline (1) entraîne la turbine (2), la turbine (2) fait tourner un générateur électrique (4), dans lequel l'eau, après avoir passé la turbine (2), est guidée dans la canalisation de réseau d'approvisionnement en eau (12) via une canalisation de sortie (3) raccordée à un éjecteur (3.1) qui ramène l'eau de la turbine (2) vers la canalisation de réseau d'approvisionnement en eau (12), **caractérisé en ce que** l'éjecteur (3.1) se présente sous la forme d'un corps (40) situé à l'intérieur de la canalisation de réseau d'approvisionnement en eau (12), dans lequel une ouverture dans le corps (40) est située sur le côté amont si bien que l'eau provenant du côté amont pénètre dans le corps (40) et s'écoule vers une buse (42) en communication liquide avec la canalisation de sortie (3), le corps (40) comprend également une section intérieure de forme conique située après la buse (42), dans lequel des ouvertures inclinées (43) dans les parois délimitant la section conique produisent un effet d'aspiration supplémentaire qui aspire de l'eau supplémentaire provenant de la canalisation de réseau d'approvisionnement en eau (12) au travers de la section de forme conique intérieure de l'éjecteur (40).

2. Le système selon la revendication 1, dans lequel le diamètre de l'éjecteur (3.1) est inférieur au diamètre intérieur de la canalisation de réseau d'approvisionnement en eau (12).

3. Le système selon la revendication 1, dans lequel le diamètre de l'éjecteur (3.1) est nettement inférieur au diamètre intérieur de la canalisation de réseau d'approvisionnement en eau (12).
